Europäisches Patentamt

European Patent Office

Office européen des brevets

(11) Numéro de publication: **0 345 125**
A1

## (12) DEMANDE DE BREVET EUROPEEN

(21) Numéro de dépôt: 89401431.5

(22) Date de dépôt: 25.05.89

(51) Int. Cl.⁴: **B 29 C 61/00**
B 29 C 63/40, E 04 C 3/29,
E 04 C 3/36

(30) Priorité: 01.06.88 FR 8807280

(43) Date de publication de la demande:
06.12.89 Bulletin 89/49

(84) Etats contractants désignés:
AT BE CH DE ES FR GB GR IT LI LU NL SE

(71) Demandeur: Charriere, J.J.
B.P.44 8 Avenue Yver Bapterosses
F-45250 Briare (FR)

(72) Inventeur: Charriere, J.J.
B.P.44 8 Avenue Yver Bapterosses
F-45250 Briare (FR)

(74) Mandataire: Hirsch, Marc-Roger
Cabinet Hirsch 34 rue de Bassano
F-75008 Paris (FR)

(54) Produit composite constitué d'un corps central enveloppé d'une gaine et ses applications.

(57) Le produit composite est constitué d'un corps central réalisé en une matière ou en un matériau présentant des qualités médiocres et qui est enveloppé au moins sur sa longueur d'un film ou gaine en matière plastique rétracté par tout moyen adéquat de chauffage après sa mise en place.

Le corps central (22) est réalisé en forme de poutre ou de cale d'épaisseur importante et l'enveloppe entourant le corps central (22) est réalisée par enrubannage d'au moins une bande (23) de film rétractable avec recouvrement des bords adjacents.

Application à la réalisation d'éléments de coffrage du béton ou bien de cales ou de blocs pour le calage ou la manutention.

FIG.9

EP 0 345 125 A1

Bundesdruckerei Berlin

Description

## PRODUIT COMPOSITE CONSTITUE D'UN CORPS CENTRAL ENVELOPPE D'UNE GAINE ET SES APPLICATIONS

L'invention a pour objet un produit composite constitué d'un corps central réalisé en une matière ou en un matériau présentant des qualités médiocres, par exemple du polystyrène expansé, de la paille, des déchets agglomérés, qui est enveloppé au moins sur sa longueur d'un film ou gaine en matière plastique rétracté par tout moyen adéquat de chauffage après sa mise en place, de manière à comprimer ladite matière ou matériau présentant des qualités médiocres et à conférer à l'ensemble de meilleures caractéristiques mécaniques. L'invention concerne également l'application de ce matériau et/ou produit composite dans des domaines tel que ceux du bâtiment, de la manutention, des transports.

Pour réaliser des matériaux de construction, on connaît des panneaux constitués d'un matériau de faible coût, par exemple en polystyrène expansé, en mousse de polyuréthanes, en laine de roche collés sur une plaque ou entre deux plaques de plâtre cartonné. Pour obtenir de tels panneaux, le collage est une opération délicate et longue mettant en oeuvre des quantités importantes d'une colle spéciale. En outre, au cours du stockage, du transport, de la manipulation, de la pose et de la découpe de ces panneaux, apparaissent des déformations, des détériorations, des effritements, des déchets importants.

Pour d'autres applications, par exemple pour le coffrage, il est proposé des hourdis réalisés en des matériaux peu onéreux mais en général si fragiles qu'il est nécessaire de les protéger, jusqu'à leur utilisation finale comme paroi de moule pour la coulée, par exemple, d'une dalle de béton, par des planches afin d'éviter le risque de voir les ouvriers et opérateurs passer au travers.

De même, on sait réaliser de façon statique des calages et arrimages à l'aide de matériaux tels des blocs en polystyrène expansé présentant des caractéristiques mécaniques médiocres. Avec de telles cales, aussitôt qu'il se produit un déplacement des charges au cours du transport, on constate l'affaissement, l'effritement, l'arrachement de ces matériaux.

La présente invention a pour but de proposer une solution économique et fiable à ces problèmes non résolus.

A cet effet, selon l'invention, le corps central présente la forme d'une poutre ou cale d'épaisseur importante par rapport à la largeur et l'enveloppe entourant le corps central est réalisée par enrubannage d'au moins une bande de film rétractable avec recouvrement des bords adjacents de telle manière que ces bords superposés se soudent au cours du chauffage de rétraction pour constituer une gaine axiale continue. L'enrubannage confère de façon aisée un serrage initial au corps central dans le sens transversal et permet de réaliser plus facilement l'enveloppement initial du corps central jusqu'à son passage dans un four de chauffage provoquant simultanément la rétraction du film d'enveloppe et son assemblage en gaine continue par soudure des bords superposés.

Selon un autre mode de réalisation du produit composite, l'enveloppe entourant le corps central est réalisée par enrubannage de plusieurs bandes distinctes parallèles assurant le recouvrement axial du corps central avec une ligne de soudure commune à toutes les bandes et située sur l'une des faces du produit. La ou les bandes de film rétractable servant à l'enveloppement du corps central présente(nt) un taux de rétraction dans le sens longitudinal qui est nettement supérieur (jusqu'à 7 fois) au taux de rétraction dans le sens transversal. De même, la ou les bande(s) de film rétractable peuvent présenter une structure modifiée par réticulation.

Selon un autre mode de réalisation du produit composite, l'enveloppe entourant le corps central comporte à ses extrémités des parties libres destinées à servir de sangles pour la mise en place ou la fixation du corps central. Les sangles sont avantageusement constituées par la bande de film rétractable torsadée sur elle même et soumise à un étirage suivi d'un chauffage de rétraction réalisé en même temps que le chauffage de rétraction de l'enveloppe du corps central, pour donner un cordage résistant.

Selon un mode de réalisation particulier de l'invention, l'enveloppe entourant le corps central dépasse sur l'une des faces d'extrémité d'une faible longueur, de telle manière qu'après sa rétraction, l'enveloppe vienne recouvrir les bords et/ou les coins de ladite face d'extrémité pour les protéger de la dégradation.

Selon un mode de réalisation performant de l'invention, la bande de film est parsemée de petites perforations (microperforations) permettant l'échappement de l'air emprisonné entre la bande et le corps central et surtout entre les bandes de film superposées pendant la rétraction du film et aptes à s'obturer au moins partiellement par "autosoudure" après le chauffage de rétraction.

Selon un mode de réalisation convenant particulièrement aux poutres ou cales en produit composite selon l'invention et destinées à subir des flexions importantes, la ou les bandes de film sont enrubannées pour former au moins deux couches superposées qui sont traitées par chauffage de manière que la couche extérieure se rétracte plus que la couche intérieure qui sert alors d'organe de réduction de la friction entre le corps central et la gaine axiale au cours de la flexion du produit composite.

Selon un autre mode de réalisation, le produit composite est constitué d'un corps central qui présente une structure alvéolaire résultant du gaufrage ou du façonnage en nids d'abeille d'un matériau ou d'un empilement de feuilles ondulées, par exemple en carton.

Dans un autre mode de réalisation du produit composite, le corps central présente des évidements longitudinaux et/ou transversaux.

En variante, le produit composite est constitué d'un corps central qui comporte intérieurement au moins un profilé métalliques apte à alourdir le produit composite et à augmenter sa résistance mécanique globale.

Selon un mode de réalisation pratique, le corps central comporte au moins un passage axial ou transversal destiné à coopérer avec une bande ou un feuillard de fixation par cerclage. En variante, le feuillard rigide de fixation par cerclage est enfoncé à force dans le corps central de manière à le traverser axialement ou transversalement.

Selon un autre mode de réalisation du produit composite, le corps central comporte sur chacune de ses deux faces latérales d'extrémité une plaque ou rondelle de forme adaptée à cette extrémité et maintenue sur ladite extrémité par tout moyen tel que collage, adhésif, clou ou cheville, après la mise en place du film enveloppe et sa rétraction autour du corps central, de manière à réduire la fragilité de ladite extrémité. La plaque peut comporter une pointe d'enfichage munie d'un canal central de guidage d'un clou ou d'une vis de fixation.

Le produit composite est utilisé selon l'invention pour réaliser des éléments de coffrage de planchers, de voûtes etc.. mis en place avant la coulée du béton.

Le produit composite peut être utilisé pour réaliser des cales, des blocs ronds, carrés ou rectangulaires mis en oeuvre dans les opérations de calage ou d'arrimage, de capitonnage, de manutention ou comme sabots de palettisation d'une charge non poinçonnante.

D'autres buts, avantages et caractéristiques apparaîtront à la lecture de la description de divers modes de réalisation de l'invention, faite à titre non limitatif et en référence aux dessin annexé où:

- la figure 1 représente schématiquement une coupe longitudinale du produit composite selon l'invention et dont le corps central est enveloppé d'un film rétractable;

- la figure 2 est une vue schématique en coupe transversale du produit composite de la figure 1;

- la figure 3 est une représentation schématique d'un mode de réalisation du produit composite selon l'invention dont le corps central est enrubanné d'une bande de film rétractable;

- les figures 4a à 4c représentent schématiquement un autre mode de réalisation du produit composite selon l'invention en illustrant sa flexibilité;

- la figure 5 représente une coupe transversale d'un produit composite selon l'invention où le corps central est entouré d'un premier film métallique puis du film rétractable;

- la figure 6 représente en perspective deux éléments en produit composite selon l'invention collés à la partie inférieure d'une caisse;

- la figure 7 représente schématiquement et en coupe longitudinale un produit composite selon l'invention fixé à l'aide de clous sur un support;

- la figure 8 représente en coupe transversale un produit composite selon l'invention comportant des passages de positionnement d'un feuillard de fixation par cerclage;

- la figure 9 représente schématiquement en coupe longitudinale un produit composite selon l'invention dont les extrémités libres de la bande de film rétractable peuvent servir de sangles de fixation ou de cerclage;

- la figure 10 représente en perspective et de façon schématique un produit composite selon l'invention en forme de cale ou de barre parallélépipédique et qui présente, d'une part des plaques de renforcement à ses extrémités et d'autre part, sur sa face supérieure, un cordon de colle d'assemblage.

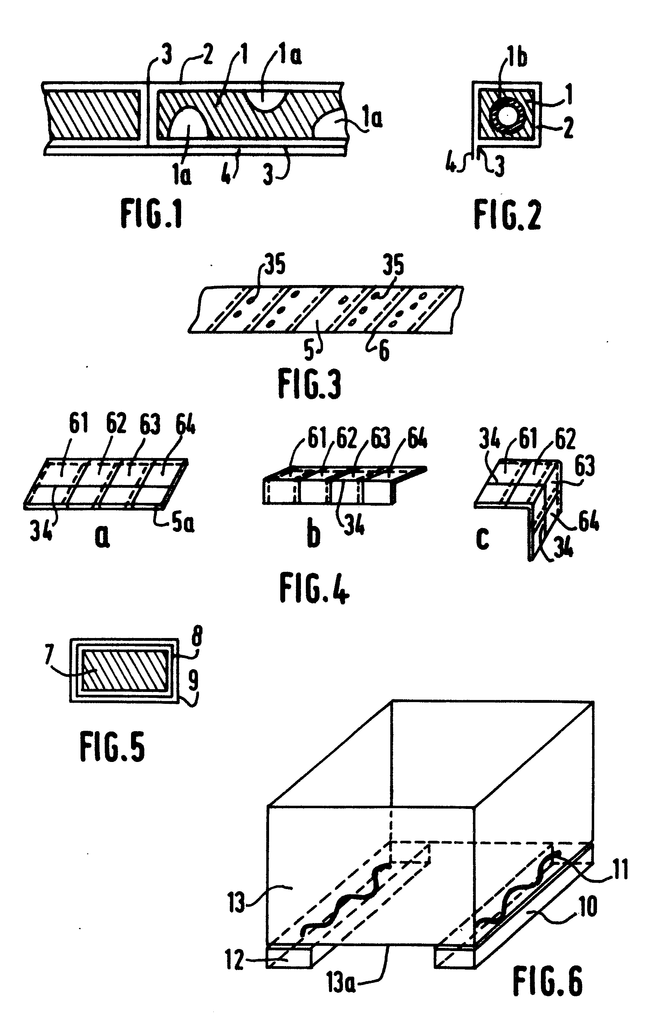

On a représenté sur la figure 1 un corps central 1 dont la structure peut être alvéolaire, résultant par exemple de l'expansion d'une matière plastique telle que le polystyrène expansé extrudé ou moulé, ou d'un moussage suivi d'une gélification d'un ou plusieurs constituants tels que des polyuréthanes, ou encore d'un gaufrage ou d'un façonnage en nids d'abeille de feuilles (de carton par exemple), ou d'un compactage de déchets les plus divers: paille, roseaux, laine, etc... Le corps central 1 constitue un volume homogène ou non présentant des qualités mécaniques pour le moins médiocres mais d'un coût aussi bas que possible.

Le corps central 1 peut comporter des évidements 1a longitudinaux et/ou transversaux, intérieurs ou non, réalisés au moment de sa fabrication dans le but d'économiser la matière ou afin d'obtenir une barrière thermique et/ou phonique encore plus efficace.

La grande légèreté du corps central peut devenir un inconvénient, par exemple dans le cas où le produit composite sert à la réalisation de cales destinées à des aires de stockage situées en plein air. Dans ce cas, le corps central 1 comportera intérieurement, de préférence dans le sens de la longueur, des armatures métalliques lourdes telles que des fers ronds, des tubes, des profilés, des plaques ou des grillages métalliques (voir le tube rond 1b représenté en section à la figure 2) capables de le stabiliser vis à vis du vent et/ou d'en augmenter sa résistance mécanique globale. Le corps central 1 peut être entouré totalement ou partiellement d'un grillage métallique lui apportant renforcement, protection, moyens de fixation.

Selon un premier mode de réalisation connu en soi, le corps central 1 est enveloppé d'un film 2 en un matériau apte à se rétracter et qui est soudé sur lui-même suivant une ligne 3 en forme de L. La figure 2 représente en coupe transversale le corps central 1 enveloppé d'un film 2 soudé sur lui-même en 3. Les lisières 4 nécessaires au soudage constituent des parties non actives du film rétractable.

Le corps central 1 enveloppé du film 2 soudé sur lui-même, le cas échéant seulement refermé en position par un léger collage, constitue un ensemble qui est soumis à l'action de la chaleur par tout moyen adéquat: pistolet à flamme ou air chaud, étuve ventilée, four tunnel. Le film 2 se soude partout où ses bords sont superposés et se rétracte sur le corps central 1 en conférant au produit composite obtenu une cohésion, un relèvement important de toutes les caractéristiques mécaniques (compression, traction, flexion, résistance au choc, au frottement...), une protection efficace contre l'environnement (produits en contact, humidité, rayonnements, températures...) ainsi que des facilités de fixation sur tout support.

La figure 3 représente un corps central 5 réalisé comme précédemment mais enveloppé d'une bande de film rétractable 6 selon la technique de l'enrubannage. La bande 6 s'enroule ici selon un pas constant avec un recouvrement plus ou moins important et se soude sur elle-même au moment de sa rétraction, les parties en recouvrement constituant des zones de renforcement. La bande de film 6 est avantageusement parsemée de petites perforations 35 (microperforations) permettant l'échappement de l'air emprisonné entre la bande 6 et le corps central 5 mais surtout de l'air emprisonné entre deux bandes de film 6 superposées. Les microperforations s'obturent en général par "autosoudure" à la bande de film sous-jacente au cours du chauffage de rétraction du film.

L'enroulement de la bande 6 ainsi que sa rétraction peuvent être exécutés en continu de façon automatique et sans chutes, la largeur de la bande 6 s'adaptant à toutes les sections (dimensions et configurations) du corps central 5.

En outre, par l'emploi d'une bande 6 dont le taux de rétraction dans le sens longitudinal peut être de sept fois supérieur au taux de rétraction dans le sens transversal et si la structure de la matière qui constitue la bande a été judicieusement modifiée par réticulation, on obtient pour le produit composite obtenu par la technique de l'enrubannage une élévation plus importante de l'ensemble de ses caractéristiques, en particulier la résistance à la flexion, au frottement, à la déchirure, la résilience.

A titre d'exemple, la figure 4 représente en position A un produit composite dont le corps central 5a est constitué par exemple d'une plaque de largeur 100 millimètres et d'épaisseur 10 millimètres en polystyrène expansé présentant une masse volumique de 8 kg/m³ environ, c'est-à-dire extrêmement fragile à la flexion. Après enveloppement sur une machine automatique par plusieurs bandes de film rétractable distinctes et parallèles 61 à 64 et leur rétraction par la chaleur qui assure en même temps la soudure des bords en recouvrement pour constituer une gaine continue, le produit composite supporte aisément des pliages même répétitifs à 90° dans le sens longitudinal (position b) ou dans le sens transversal (position c), ce qui permet de l'utiliser directement comme cornière de protection pour l'emballage ou, dans une tout autre application, pour protéger le tronc des arbres, notamment des jeunes plantations. L'enrubannage du corps central à l'aide de bandes parallèles distinctes 61 à 64 est avantageusement réalisé sur une machine comportant plusieurs rouleaux de bandes disposés en parallèles, sur une table de support, de manière à assurer le recouvrement des bords adjacents des bandes et à refermer les bandes sur deux couches le cas échéant. Les bandes enroulées à plat et non plus en hélice autour du corps central 5a sont ensuite arrêtées en position par une soudure simultanée en ligne de toutes les bandes et qui est réalisée à l'aide d'une barrette chaude pressant une face du corps central. Les bandes d'enroulage peuvent alors présenter une faible largeur comme dans le cas de l'enroulement hélicoïdal représenté à la figure 3.

Lorsque l'on superpose au moins deux couches de bandes de film rétractable soit par enroulement hélicoïdal, soit de préférence par enroulement de bandes parallèles, et que l'on chauffe ensuite le produit composite au défilé avec un refroidissement de fixation en sortie du four, la couche extérieure se rétracte plus que la couche intérieure. Lorsque le produit composite constitué par exemple d'un corps central en polystyrène expansé à très faible densité (de l'ordre de 8Kg/m³), est soumis à la flexion, la première couche faiblement rétreinte et qui est au contact direct du corps central agit alors comme un élément lubrifiant entre l'enveloppe extérieure fortement rétreinte et le corps central très élastique, pour faciliter la flexion du produit composite qui peut alors épouser plus fidèlement des formes complexes sous l'effet d'une pression et assurer le capitonnage de ces formes.

Le film rétractable peut être traité ou opacifié de manière à filtrer les rayonnements infrarouges et/ou ultra- violets nocifs au comportement dans le temps du produit composite.

Selon un autre mode de réalisation représenté à la figure 5, le produit composite est obtenu par enveloppement du corps central 7 à l'aide d'une bande 8 en alliage d'aluminium suivi par exemple d'un enroulement d'une bande 9 de film rétractable, l'aluminium protégeant le corps central contre la chaleur, le feu, les rayonnements et jouant au besoin le rôle de pare-vapeur tout en favorisant la rétraction du film enveloppe. En variante, les bandes 8 et 9 sont constituées par la même bande de film réticulé d'épaisseur 40 à 50 microns enroulée deux fois sur elle-même, de manière que la couche extérieure subisse un rétreint beaucoup plus important que la couche intérieure.

La figure 6 représente des sabots de palettisation 10 et 12 réalisés en produit composite selon l'invention et comportant un cordon de colle 11 qui présente, par exemple, la propriété de ne pas sécher. Le sabot 10 est posé sur le sabot 12, les faces encollées l'une sur l'autre, les sabots étant ainsi livrés par paires. A l'utilisation, les sabots 10 et 12 sont désolidarisés et posés de façon que les faces encollées soient en regard du fond de la caisse en carton 13 à équiper. Il est ainsi possible d'introduire les fourches d'un chariot transpalette ou d'un chariot élévateur pour déplacer ou transporter la caisse 13, les sabots restant collés sur le fond 13a de la caisse. Des adhésifs double face peuvent jouer le même rôle qu'un cordon de colle.

Des tests ont été réalisés sur les sabots de palettisation tels que 10 et 12 pour comparer des sabots connus non enrubannés selon l'invention et les sabots selon l'invention entourés d'une double couche de film rétractable d'épaisseur 40 microns dont la couche extérieure a subi une rétraction par passage continu au four suivi d'une stabilisation par soufflage d'air froid. Les sabots de palettisation constitués d'une poutre de 1 m de longueur, de section 100 x 100 mm, posée sur des appuis distants de 0,90 m, sont soumis à la flexion d'une charge centrale répartie de 0,10 m de largeur :
- la poutre en polystyrène brute se rompt pour une charge de 1 kg
- la poutre enrubannée selon l'invention subit une flèche limitée de l'ordre de 0,1 m sans se rompre pour une charge de 5 kg et supporte une charge de 10 kg sans rupture mais avec une flèche très importante conduisant à un véritable pliage.

Lorsque les mêmes sabots sont disposés en essai sous la caisse 13 chargée à 500 kg, le comportement des sabots est le suivant :
- les sabots en polystyrène brut s'écrasent de 50% de leur épaisseur et ne supportent pratiquement plus la caisse;
- les sabots selon l'invention à double enrubannage au film de 40 microns et simple rétreint s'écrasent sous la charge de 500 kg de 10% seulement et restent aptes à supporter la charge en permettant l'introduction aisée des fourches d'un chariot à fourche pour le levage de la caisse.

Si la caisse était chargée à 1 tonne, il suffirait de placer quatre sabots au lieu de deux pour supporter encore la charge.

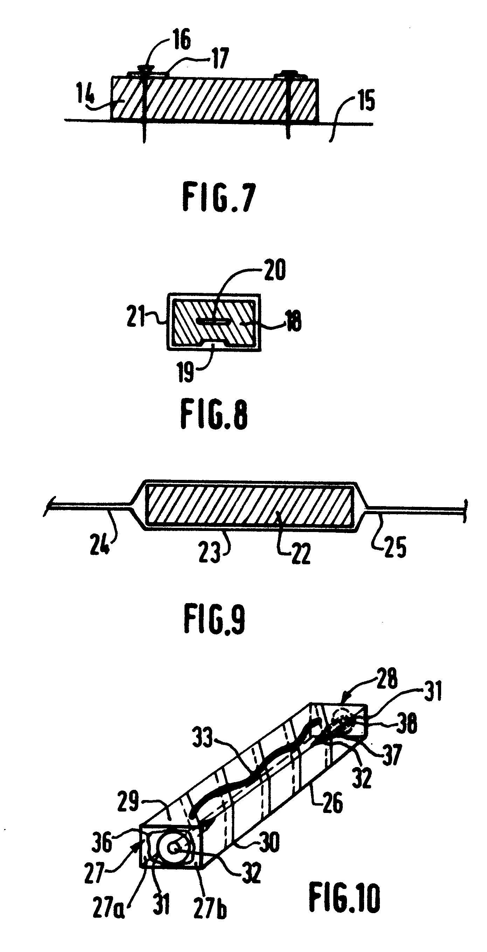

La figure 7 représente en coupe longitudinale un produit composite 14 d'épaisseur assez importante et fixé sur un plancher 15 à l'aide de clous 16. Pour éviter de meurtrir le film enveloppe, si la tête du clou n'est pas suffisamment large, on utilisera avantageusement une rondelle intermédiaire 17 en matière plastique souple d'un diamètre suffisant et qui contribuera également à rendre plus difficile l'arrachement de l'ensemble du produit composite. Le clou 16 peut être judicieusement remplacé, selon le support sur lequel on souhaite se fixer, par une cheville, une vis, un rivet...

La figure 8 représente en coupe transversale un corps central 18 d'épaisseur importante et comportant une saignée 19 et/ou un évidement interne 20 servant à positionner des feuillards de fixation par cerclage. Les feuillards peuvent être positionnés avant ou après enroulement du film enveloppe 21, et avant ou après sa rétraction. En variante, le feuillard rigide de fixation par cerclage peut être enfoncé directement au travers du produit composite dans le sens longitudinal ou dans le sens transversal.

La figure 9 représente en coupe longitudinale un corps central 22 en forme de poutre ou de cale d'épaisseur importante et enrubanné d'une bande de film 23 qui est rétractée sur le corps central. Les extrémités 24 et 25 de la bande de film 23 débordent largement de chaque côté du corps central 22 pour constituer des sangles. Ces sangles non soumises à la rétraction peuvent être par exemple nouées au dessus de la caisse qui repose sur le produit composite, et être éventuellement rétractées à leur tour pour obtenir une fixation par cerclage. Afin d'augmenter la résistance des extrémités 24 et 25 servant de sangles de cerclage, on peut les torsader et les étirer avant la rétraction par passage au four avec le corps central enrubanné 22, 23.

La figure 10 représente une cale ou poutre 26 constituée d'un corps central 29 entouré d'une bande de film 30 rétractée sur le corps central. Pour renforcer chacune des extrémités 27 et 28, on peut faire dépasser la bande de film 30 en 27a et 27b d'une faible longueur sur la face 2 pour qu'elle vienne recouvrir les coins ou les bords de cette face selon une courbe fermée sur elle-même 36 afin de les protéger de la dégradation. On peut aussi y ficher une plaque ou une rondelle 31 métallique ou en matière plastique maintenue par exemple par un clou 32. Sur la surface supérieure de la cale est disposé un cordon de colle 33 permettant la fixation de ladite cale sur un support non représenté. La plaque ou rondelle 31 comporte en général une pointe d'enfichage 37 monobloc avec la plaque et qui est munie d'un canal central 38 de guidage du clou 32 ou d'une vis équivalente.

La présente invention concerne également les applications du produit composite pour réaliser des panneaux d'épaisseur adéquate posés ou fixés solidairement sur une ossature, sur un mur, sur une cloison notamment en plâtre, disposés à l'intérieur d'une porte, assurant un rôle d'écran thermique, anti-bruit et/ou de protection contre les effets de l'humidité, de la condensation. Elle concerne également les applications pour réaliser des éléments de coffrage de planchers, de voûtes mis en place avant la coulée du béton. Le produit composite peut être utilisé directement comme cale ou bloc en toute section adéquate, mis en oeuvre notamment pour le calage, le capitonnage, la manutention, par exemple pour réaliser des sabots de palettisation fixés directement à une palette ou à une caisse.

Le produit composite peut également être utilisé, en particulier dans sa forme en cornière obtenue par pliage longitudinal d'une planche plane, comme revêtement de protection des angles et des troncs, notamment des troncs des jeunes arbres. Le produit composite selon l'invention remplit d'ailleurs de nombreuses fonctions dévolues autrefois au bois car il peut se couper à la scie dans le sens transversal et se clouer aisément tout en résistant aux agressions mécaniques courantes mais en présentant une densité et un coût bien moindre que le bois.

**Revendications**

1.- Produit composite constitué d'un corps central (1, 5, 7, 18, 22, 29) réalisé en une matière ou en un matériau présentant des qualités médiocres, par exemple du polystyrène expansé, de la la paille, des déchets agglomérés, qui est enveloppé au moins sur sa longueur d'un film ou gaine (2) en matière plastique rétracté par tout moyen adéquat de chauffage après sa mise en place, de manière à comprimer ladite matière ou matériau présentant des qualités médiocres et à conférer à l'ensemble de meilleures caractéristiques mécaniques, caractérisé en ce que le corps central (1, 5, 7, 18, 22, 29) présente la forme d'une poutre ou cale d'épaisseur importante par rapport à la largeur et en ce que l'enveloppe entourant le corps central (5) est réalisée par enrubannage d'au moins une bande (6, 9, 21, 23, 30) de film rétractable avec recouvrement des bords adjacents de telle manière que les bords superposés se soudent au cours du chauffage de rétraction pour constituer une gaine axiale continue.

2.- Produit composite selon la revendication 1, caractérisé en ce que l'enveloppe entourant le corps central (5) dépasse sur l'une des faces d'extrémité (27) d'une faible longueur de telle manière qu'après sa rétraction l'enveloppe vienne recouvrir (en 27a, 27b) les bords et/ou les coins de ladite face d'extrémité pour les protéger de la dégradation.

3.- Produit composite selon les revendications 1 et 2, caractérisé en ce que la bande de film est parsemée de petites perforations (microperforations) (35) permettant l'échappement de l'air emprisonné pendant la rétraction du film.

4.- Produit composite selon les revendications 1 à 3, caractérisé en ce que l'enveloppe entourant le corps central (5a) est réalisée par enrubannage de plusieurs bandes distinctes parallèles (61 à 64) assurant le recouvrement axial du corps central avec une ligne de soudure (34) commune à toutes les bandes et située sur l'une des faces du produit.

5.- Produit composite selon les revendications 1 à 4, caractérisé en ce que la ou les bandes de film sont enrubannées pour former au moins deux couches superposées (8 et 9) qui sont traitées par chauffage de manière que la couche extérieure se rétracte plus que la couche intérieure qui sert alors d'organe de réduction de la friction entre le corps central (7) et la gaine axiale au cours de la flexion du produit composite.

6.- Produit composite selon les revendications 1 à 5, caractérisé en ce que la ou les bandes de film rétractable (6, 9, 21, 23, 30) servant à l'enveloppement du corps central présentent un taux de rétraction dans le sens longitudinal qui est nettement supérieur (jusqu'à 7 fois) au taux de rétraction dans le sens transversal.

7.- Produit composite selon les revendications 1 à 6, caractérisé en ce que la ou les bande(s) de film rétractable (6, 9, 21, 23, 30) présente une structure modifiée par réticulation.

8.- Produit composite selon les revendications 1 à 7, caractérisé en ce que l'enveloppe (23) entourant le corps central (22) comporte à ses extrémités des parties libres débordantes (24, 25) destinées à servir de sangles pour la mise en place ou la fixation du corps central.

9.- Produit composite selon la revendication 8, caractérisé en ce que les sangles (24, 25) sont constituées par la bande de film rétractable torsadée sur elle même et soumise à un étirage suivi d'un chauffage de rétraction réalisé en même temps que le chauffage de rétraction de l'enveloppe (23) du corps central (22) pour donner un cordage résistant.

10.- Produit composite selon les revendications 1 à 9, caractérisé en ce que le corps central (1) présente une structure alvéolaire résultant du gaufrage ou du façonnage en nids d'abeille d'un matériau ou d'un empilement de feuilles ondulées.

11.- Produit composite selon les revendications 1 à 10, caractérisé en ce que le corps central présente des évidements (1a) longitudinaux et/ou transversaux.

12.- Produit composite selon les revendications de 1 à 11, caractérisé en ce que le corps central comporte intérieurement au moins un profilé métallique (1b) apte à alourdir le produit composite et à augmenter sa résistance mécanique globale.

13.- Produit composite selon les revendications 1 à 12, caractérisé en ce que le corps central (18) comporte au moins un passage axial ou transversal (19, 20) destiné à coopérer avec une bande ou un feuillard de fixation du produit composite par cerclage.

14.- Produit composite selon les revendications 1 à 13, caractérisé en ce que le corps central comporte une bande ou un feuillard rigide de fixation par cerclage.

15.- Produit composite selon les revendications 1 à 14, caractérisé en ce que le corps central (29) comporte sur chacune de ses deux faces latérales d'extrémité (27, 28) une plaque ou rondelle (31) de forme adaptée à cette extrémité et maintenue sur ladite extrémité par tout moyen tel que collage, adhésif, clou (32) ou cheville, après la mise en place du film enveloppe (30) et sa rétraction autour du corps central (29) de manière à réduire la fragilité de ladite extrémité (27).

16.- Produit composite selon la revendication 15, caractérisé en ce que la plaque ou rondelle (31) comporte une pointe d'enfichage (37) munie d'un canal central (38) de guidage d'un clou (32) ou d'une vis de fixation.

17.- Application du produit composite selon les revendications 1 à 16, caractérisé en ce que le produit composite est utilisé pour réaliser des éléments de coffrage de planchers, de voûtes etc.., mis en place avant la coulée du béton.

18.- Application du produit composite selon les revendications 1 à 16, caractérisé en ce que le produit composite est utilisé pour réaliser des cales, des blocs ronds, carrés ou rectangulaire mis en oeuvre dans les opérations de calage ou d'arrimage, de capitonnage, de stockage, de manutention.

19.- Application du produit composite selon la revendication 18, caractérisée en ce qu'il est utilisé comme sabot de palettisation d'une charge non poinçonnante.

EP 0 345 125 A1

FIG.1

FIG.2

FIG.3

FIG.4

FIG.5

FIG.6

**FIG.7**

**FIG.8**

**FIG.9**

**FIG.10**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 456 180 (PHENOL ENGINE RING) * En entier * --- | 1,2,6,7 ,12 | B 29 C 61/00 B 29 C 63/40 E 04 C 3/29 E 04 C 3/36 |
| Y | US-A-4 001 065 (R.J. PENNECK et al.) * Revendication 1 * --- | 1,2,6,7 ,12 | |
| A | US-A-4 194 329 (A.C. WENDT) --- | | |
| A | FR-A-2 021 581 (F. PREISLER) --- | | |
| A | US-A-4 574 099 (M. NIXON) ----- | | |

DOMAINES TECHNIQUES
RECHERCHES (Int. Cl.4)

B 29 C
E 04 C

Le présent rapport a été établi pour toutes les revendications

| Lieu de la recherche | Date d'achèvement de la recherche | Examinateur |
|---|---|---|
| LA HAYE | 13-09-1989 | SZAMOCKI G.J.A. |